(19) Europäisches Patentamt / European Patent Office / Office européen des brevets

(11) **EP 2 191 182 B1**

(12) **EUROPÄISCHE PATENTSCHRIFT**

(45) Veröffentlichungstag und Bekanntmachung des Hinweises auf die Patenterteilung:
**17.04.2013   Patentblatt 2013/16**

(21) Anmeldenummer: **08804616.4**

(22) Anmeldetag: **23.09.2008**

(51) Int Cl.:
*F16K 37/00* *(2006.01)*

(86) Internationale Anmeldenummer:
**PCT/EP2008/062702**

(87) Internationale Veröffentlichungsnummer:
**WO 2009/040349 (02.04.2009 Gazette 2009/14)**

(54) **DIAGNOSESYSTEM UND DIAGNOSEVERFAHREN FÜR EIN VENTIL, INSBESONDERE EIN SCHLIESSVENTIL ODER EIN REGELVENTIL**

DIAGNOSTIC SYSTEM AND DIAGNOSTIC METHOD FOR A VALVE, PARTICULARLY A CLOSING VALVE OR A CONTROL VALVE

SYSTÈME DIAGNOSTIQUE ET PROCÉDÉ DE DIAGNOSTIC POUR UNE SOUPAPE, EN PARTICULIER UNE SOUPAPE DE FERMETURE OU UNE SOUPAPE DE RÉGLAGE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.09.2007   DE 102007045529**

(43) Veröffentlichungstag der Anmeldung:
**02.06.2010   Patentblatt 2010/22**

(73) Patentinhaber: **Siemens Aktiengesellschaft**
**80333 München (DE)**

(72) Erfinder: **PÜTTMER, Alf**
**76137 Karlsruhe (DE)**

(74) Vertreter: **Wolff, Harry**
**Siemens AG**
**Postfach 22 16 34**
**80506 München (DE)**

(56) Entgegenhaltungen:
**EP-A- 0 637 713        DE-A1- 19 924 377**
**DE-A1- 19 947 129**

## Beschreibung

Die Erfindung betrifft ein Diagnosesystem für ein Ventil, insbesondere ein Schließventil oder ein Regelventil, das über einen Antrieb betätigbar und in eine Rohrleitung einsetzbar ist, nach dem Oberbegriff des Anspruchs 1 sowie ein mit dem Diagnosesystem ausführbares Diagnoseverfahren gemäß dem Oberbegriff des Anspruchs 4.

In vielen Bereichen der Prozess- und Energietechnik hängt der störungsfreie Betrieb einer Anlage von der einwandfreien Funktion der eingesetzten Steuer-, Sperr-, Schließ- und Regelventile ab. Zur Vermeidung kostenintensiver, irregulärer Betriebsunterbrechungen sollten Ventilschäden möglichst bereits im Anfangsstadium erkannt werden, d. h. bevor ein Ausfall eines Ventils einen Stillstand der Anlage verursachen kann. Beispielsweise führen defekte Ventilsitze zu Leckströmungen, auch als Leckagen bezeichnet, die eine breitbandige Schallemission erzeugen. Eine Aufnahme und Auswertung der Schallemission eines Ventils kann somit zur Früherkennung von Ventilschäden dienen. Da Ventilschäden zu Fehlern und teueren Folgekosten führen können, ist eine Diagnose eventuell mit automatischer Erfassung und programmierbarer Bewertung der Fehler von großem Nutzen. Statistische Auswertungen der Diagnosedaten können sowohl zur Optimierung der Wartungsprozesse für einen rechtzeitigen Ersatz eines schadhaften Ventils als auch zur qualitativen Beurteilung und Klassifizierung der Ventilhersteller oder zur Beurteilung der Eignung bestimmter Ventile für verschiedene Prozessarten dienen.

Aus der DE 199 24 377 A1 ist ein Diagnosesystem für ein von einem Stellungsregler über einen Antrieb betätigbares Ventil bekannt, das eine Einrichtung zur Erfassung, Speicherung und Auswertung von an dem Ventil gemessenen Körperschallspektren aufweist. Um eine besonders zuverlässige Ventildiagnose zu ermöglichen, ist in der Einrichtung zur Erfassung, Speicherung und Auswertung ein bei geringfügig geöffnetem, intaktem Ventil erfasstes Körperschallspektrum abspeicherbar. Zur Diagnose wird ein bei geschlossenem Ventil erfasstes Körperschallspektrum mit dem abgespeicherten verglichen und die Ähnlichkeit als ein Kriterium für die Undichtigkeit des Ventils herangezogen.

Aus der DE 199 47 129 A1 ist ein weiteres Diagnosesystem für ein Ventil bekannt. Als Möglichkeiten zur Anbringung eines Aufnehmers für Körperschall sind die Außenwand des Ventilgehäuses, das Joch zwischen Ventilgehäuse und Antrieb, der Verbindungsflansch zwischen Joch und Gehäuse, die Flansche zwischen Gehäuse und Rohrleitung sowie die Ventilstange angegeben. Ein Messsignal, welches der Schallaufnehmer liefert, wird einer Auswerteeinrichtung zugeführt, die sich im Gehäuse des Ventilstellungsreglers befindet oder separat von diesem angeordnet werden kann. Problematisch dabei ist, dass der Schallaufnehmer ein Messsignal mit vergleichsweise kleinem Signalpegel liefert, das nur mit einem gewissen Aufwand störungsfrei zur Auswerteeinrichtung übertragen werden kann.

Alternativ dazu ist es möglich, den Aufnehmer im oder am Gehäuse der Auswerteeinrichtung anzuordnen, die dann Schall leitend mit dem Ventil verbunden ist. Das hat den Vorteil, dass aufgrund des geringen Abstands zwischen der Auswerteeinrichtung und dem Messaufnehmer vergleichsweise kurze Verbindungsleitungen erforderlich sind. Ein beispielsweise elektrisches Messsignal erfährt somit auf dem Übertragungsweg eine nur geringe Dämpfung und kann aufgrund der geringen räumlichen Abmessungen ohne großen Aufwand gegen Einkopplung von Störungen abgesichert werden. Zudem kann das Diagnosesystem besonders einfach an einem Ventil montiert werden, da keine Kabelverlegung außerhalb des Gehäuses der Auswerteeinrichtung und keine gesonderte Montage des Aufnehmers für Körperschall am Ventil erforderlich sind. Die Ultraschallemissionen, die vorwiegend im Bereich des Schließkörpers entstehen, werden als Schallsignal über das Ventilgehäuse, einen üblicherweise zwischen diesem und einem Joch angeordneten Flansch sowie über das Joch selbst in den Schallaufnehmer eingekoppelt, der sich im oder am Gehäuse der Auswerteeinrichtung befindet, die üblicherweise am Joch angeschraubt wird. Das Messsignal gelangt somit nicht in elektrischer Form, sondern in akustischer Form in das Gehäuse der Auswerteeinrichtung, in welchem die akustisch/elektrische Signalwandlung mit dem Aufnehmer für Körperschall durchgeführt wird.

Aus der EP 0 637 713 A1 ist ein Diagnosesystem bekannt, bei welchem an dem Gehäuse des Ventils ein Körperschallsensor angebracht und ein Aufnehmer für den Druck in der Zulaufseite der Rohrleitung vorhanden ist. Das Signal des Körperschallsensors wird einer Einrichtung zur Erfassung und Speicherung von Körperschallspektren zugeführt. Bei intaktem Ventil und bei defektem Ventil ergeben sich unterschiedliche Verläufe des Schwingungspegels über der Frequenz. Durch Bildung des Flächenintegrals und Vorgabe einer tolerierbaren Abweichung kann ein schadhaftes Ventil erkannt werden, wobei sich insbesondere Verschleiß, bedingt durch Korrosion, Kavitation oder Erosion, feststellen lässt.

Den bekannten Diagnosesystemen ist gemeinsam, dass die Diagnoseaussage nur anhand einer vergleichsweise aufwendigen Analyse des aufgenommenen Körperschallsignals möglich ist und dass mit ihnen lediglich das Vorhandensein einer Leckage festgestellt werden kann. Eine quantitative Beurteilung der Leckage erlauben die bekannten Diagnosesysteme dagegen nicht.

Der Erfindung liegt die Aufgabe zugrunde, ein Diagnosesystem und ein Diagnoseverfahren für ein Ventil, insbesondere ein Schließventil oder ein Regelventil, das über einen Antrieb betätigbar und in eine Rohrleitung einbaubar ist, zu schaffen, die eine Erkennung einer Leckage, die einen zulässigen Wert übersteigt, im eingebauten Zustand des Ventils ermöglichen und dabei ohne aufwendige Analyse des Körperschallsignals, beispielsweise durch Fourier-Analyse, auskommen.

Zur Lösung dieser Aufgabe weist das Diagnosesystem der eingangs genannten Art die im kennzeichnenden Teil des Anspruchs 1 angegebenen Merkmale auf. In Anspruch 4 ist ein zur Durchführung der Diagnose geeignetes Diagnoseverfahren und in den abhängigen Ansprüchen sind vorteilhafte Weiterbildungen der Erfindung beschrieben.

Die Erfindung beruht auf der Erkenntnis, dass bei einer Leckage ähnlich wie im normalen Betrieb des Ventils mit Flüssigkeiten ab einem gewissen Differenzdruckverhältnis Z Kavitation auftritt. Dabei wird das Differenzdruckverhältnis Z näherungsweise berechnet nach der Formel:

$$Z = \frac{p1 - p2}{p1 - pv},$$

mit

p1 - Druck auf der Zulaufseite des Ventils,
p2 - Druck auf der Ablaufseite und
pv - Dampfdruck der Flüssigkeit.

Beim Übergang von turbulenter Strömung zu einer Strömung mit Auftreten von Kavitation, der durch ein Anheben des Differenzdrucks hervorgerufen werden kann, steigt die Körperschallemission sprunghaft an. Durch empirische Messungen mit verschiedenen Durchflussmengen der Leckage wurde festgestellt, dass sich ein kritisches Differenzdruckverhältnis $Z_{Cri}$, bei dessen Überschreitung Kavitation einsetzt, mit wachsender Größe der Leckage in Richtung kleinerer Werte verschiebt. Das heißt mit anderen Worten, je größer die Durchflussmenge der Leckage ist, desto kleiner ist das kritische Differenzdruckverhältnis, ab welchem Kavitation auftritt und anhand der Körperschallemission festgestellt werden kann. Setzt man einmal voraus, dass der Druck auf der Ablaufseite und der Dampfdruck der Flüssigkeit konstant sind, bedeutet dies gleichzeitig, dass die Kavitation bei einem geringeren Prüfdruck auf der Zulaufseite akustisch detektierbar ist. Da die zulässige Leckage vom Kv-Wert und der Leckageklasse des Ventils abhängig ist, ist das kritische Differenzdruckverhältnis ebenfalls im Wesentlichen von diesen Parametern abhängig. Ein Überschreiten der zulässigen Leckage kann festgestellt werden, wenn bereits bei einem Druck auf der Zulaufseite, der kleiner als der dem kritischen Differenzdruckverhältnis entsprechende Prüfdruck ist, das Auftreten von Kavitation akustisch festgestellt werden kann. Es besteht somit ein Zusammenhang zwischen den Parametern des Ventils, nämlich der Leckageklasse und dem Kv-Wert, und einem Prüfdruck, bis zu welchem bei Einhalten der Leckageklasse über die Körperschallmessung keine Kavitation festzustellen ist. Die Bestimmung des ersten Referenzwerts des Drucks kann besonders einfach durchgeführt werden, wenn er durch die Auswerteeinrichtung automatisch anhand eines in einem Speicher hinterlegten Kennlinienfeldes ermittelt wird, dessen Parameter zumindest der Kv-Wert des Ventils und die Leckageklasse des Ventils sind. Beide Parameter liegen üblicherweise im Datenblatt des Ventils vor und können beispielsweise bei der Inbetriebnahme des Diagnosesystems manuell über eine Eingabetastatur eingestellt werden. Der Kv-Wert des Ventils, der häufig auch als Durchflussfaktor oder Durchflusskoeffizient bezeichnet wird, stellt ein Maß für den erzielbaren Durchsatz oder Durchfluss einer Flüssigkeit oder eines Gases durch das Ventil dar. Er wird daher in $m^3$/h angegeben und dient zur Auswahl oder Dimensionierung des Ventils. Je nach ihrer Dichtheit im geschlossenen Zustand werden Ventile entsprechend den Standards ANSI/FCI 70-2 und IEC 60534-4 in sechs verschiedene Leckageklassen eingeteilt. Beispielsweise ist in der Leckageklasse II eine Leckage von 0,5 %, in der Klasse III eine Leckage von 0,1 % und in der Leckageklasse IV eine Leckage von 0,01 % des Kv-Werts zulässig. Wenn ein Ventil die Grenzwerte seiner Leckageklasse nicht mehr einhält, bedeutet dies, dass es seine Sperrfunktion nicht mehr in ausreichendem Maße erfüllt und das Ventil oder seine Innengarnitur durch eine neue mit bekannter Leckageklasse ersetzt werden muss.

Wie bereits oben erwähnt, steigt die Körperschallemission bei Einsetzen von Kavitation sprunghaft an. Bei Anheben des Drucks auf der Zulaufseite des Ventils steigt der Schallpegel zunächst langsam an, solange die Strömung im Ventil turbulent ist. Mit dem Einsetzen der Kavitation wird der Anstieg wesentlich steiler, so dass ein deutlich erkennbarer Knickpunkt in der Schallpegelkurve erscheint. Der Körperschallpegel, der sich bei diesem Knickpunkt einstellt, ist zuverlässig bestimmbar und wird vorzugsweise bei der Inbetriebnahme des Ventils applikationsspezifisch ermittelt, da er von den jeweiligen Einbaubedingungen abhängig ist. Mit einem Referenzwert, der im Wesentlichen diesem Schallpegel entspricht, kann daher zuverlässig zwischen turbulenter und kavitationsbehafteter Strömung unterschieden werden.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1    einen prinzipiellen Aufbau eines Regelventils mit Auswerteeinrichtung,
Figur 2    eine Verschaltung des Ventils in einer Rohrleitung,
Figur 3    ein Schallpegeldiagramm und
Figur 4    ein Kennlinienfeld zur Bestimmung des ersten Referenzwerts.

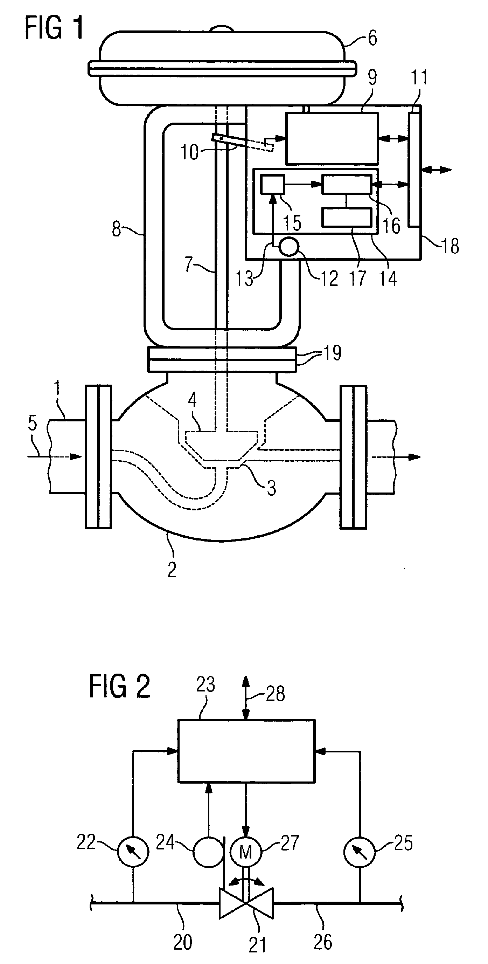

In eine Rohrleitung 1 einer in Figur 1 nicht weiter dargestellten prozesstechnischen Anlage ist ein Ventil 2 eingebaut, das durch einen entsprechenden Hub eines mit einem Ventilsitz 3 zusammenwirkenden Schließkörpers 4 den Durchfluss eines Mediums 5 steuert. Der Hub wird durch einen pneumatischen Antrieb 6 erzeugt und mittels einer Ventilstange 7 auf den Schließkörper 4 übertragen. Der Antrieb 6 ist über ein Joch 8 mit dem Gehäuse des Ventils 2 verbunden. An dem Joch 8 ist ein Stellungsregler 9 angebracht, der eingangsseitig über ein an der Ventilstange 7 angreifendes Verbindungsstück den Hub erfasst, diesen mit einem über eine Datenschnittstelle 11 von einem Feldbus zugeführten Sollwert vergleicht und ausgangsseitig den pneumatischen Antrieb 6 im Sinne einer Ausregelung der Regeldifferenz steuert. Ein Aufnehmer 12 für Körperschall ist in eine Befestigungsschraube integriert. Ein Messsignal 13 des Aufnehmers 12 wird einer Einrichtung 14 zur Auswertung des aufgenommenen Messsignals zugeführt. Die Einrichtung 14 enthält eine Signalaufbereitungsschaltung 15, in der das Messsignal 13 des Schallaufnehmers 12 verstärkt, gefiltert und digitalisiert wird. In einer nachgeordneten Recheneinheit 16 wird aus dem aufbereiteten Signal 13 der Schallpegel bestimmt. In einem Speicher 17 sind ein erster Referenzwert des Drucks und ein zweiter Referenzwert des Körperschallpegels abgespeichert. Weiterhin ist im Speicher 17 ein Kennlinienfeld hinterlegt, das zur automatischen Ermittlung des ersten Referenzwerts des Drucks in Abhängigkeit des Kv-Werts, der Leckageklasse des Ventils und des Drucks in der Ablaufseite der Rohrleitung dient, falls sich der Letztere vom atmosphärischen Umgebungsdruck unterscheidet. Die Diagnose des Ventils wird periodisch durchgeführt oder über die Datenschnittstelle 11 veranlasst, über die auch das Ergebnis der Diagnose ausgebbar ist. Ein zur Diagnose benötigter Wert des Drucks auf der Zulaufseite wird der Auswerteeinrichtung 14 von einem vorgeschalteten, in Figur 1 nicht dargestellten Druckmessumformer über die Datenschnittstelle 11 zur Verfügung gestellt. Stellungsregler 9, Aufnehmer 12 und Auswerteeinrichtung 14 sind in einem gemeinsamen Gehäuse 18, das mit einer druckdichten Kapselung für den Einsatz in explosionsgefährdeten Bereichen ausgestattet ist, angeordnet. Dadurch werden extern geführte Verbindungskabel zwischen den elektronischen Komponenten des Regelventils vermieden. Ein durch eventuell vorhandene Leckströmungen verursachter Körperschall gelangt über das Gehäuse des Ventils 2, eine Flanschverbindung 19 zwischen dem Gehäuse des Ventils 2 und dem Joch 8 sowie über das Joch 8 selbst in den Aufnehmer 12, der, wie bereits oben angegeben, als Befestigungsschraube ausgebildet ist und somit eine gute Einkopplung des über das Joch 8 geleiteten Körperschalls ermöglicht.

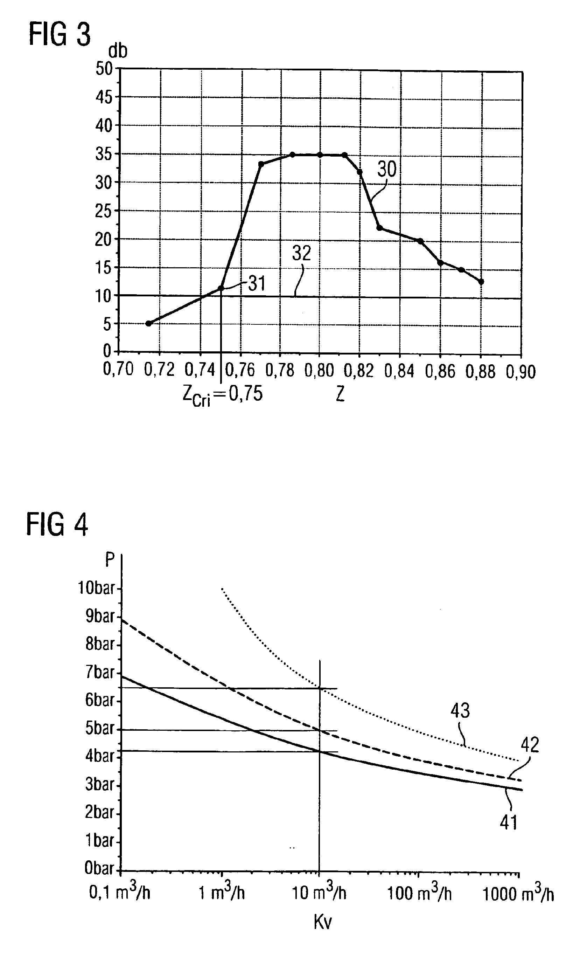

Figur 2 zeigt ein Prinzipschaltbild eines Anlagenausschnitts mit einem Diagnosesystem. In einer Zulaufseite 20 der Rohrleitung, in welche ein Ventil 21 eingebaut ist, wird der herrschende Druck mit einem Aufnehmer 22 gemessen und an eine Auswerteeinrichtung 23 übergeben. Ein Aufnehmer 24 für Körperschall ist am Ventil 21 angebracht und liefert der Auswerteeinrichtung 23 ein Messsignal des Körperschalls. Mit einem Aufnehmer 25 für den auf einer Ablaufseite 26 der Rohrleitung herrschenden Druck wird dieser erfasst und an die Auswerteeinrichtung 23 weitergegeben. Zur Betätigung des Ventils ist ein Antrieb 27 vorgesehen. Der Aufnehmer 25 kann beispielsweise dann entfallen, wenn die Ablaufseite 26 der Rohrleitung einseitig offen ist und dort ständig atmosphärischer Umgebungsdruck herrscht. Zur Diagnose des Ventils 21 und zu seiner Überwachung auf Einhalten der sich aus seiner Leckageklasse und seinem Kv-Wert ergebenden zulässigen Leckage wird das Ventil 21 durch entsprechende Ansteuerung des Antriebs 27 geschlossen. Der auf der Zulaufseite 20 herrschende Druck wird mit dem Aufnehmer 22 erfasst und in der Auswerteeinrichtung 23 mit einem ersten Referenzwert verglichen, dessen Bestimmung später anhand Figur 4 näher erläutert wird. Gleichzeitig wird mit dem Aufnehmer 24 am Ventil 21 der Körperschall erfasst und in der Auswerteeinrichtung 23 der Körperschallpegel mit einem zweiten Referenzwert verglichen, dessen Bestimmung anhand Figur 3 später näher erläutert wird. Eine Überschreitung des zweiten Referenzwerts deutet darauf hin, dass die im Ventil 21 herrschende Strömung mit Kavitation behaftet ist. Tritt Kavitation bereits auf, obwohl der Druck auf der Zulaufseite 20 unterhalb des ersten Referenzwerts liegt, wird ein Überschreiten der zulässigen Leckage festgestellt und eine entsprechende Meldung über eine Datenschnittstelle 28 zur Einleitung eventuell erforderlicher Wartungsmaßnahmen ausgegeben. Sofern es die Einbaubedingungen des Ventils 21 in der Rohrleitung zulassen, wird vorzugsweise zur Ventildiagnose ein dem ersten Referenzwert des Drucks entsprechender Druck auf der Zulaufseite 20 und Atmosphärendruck auf der Ablaufseite 26 eingestellt. Wenn unter diesen Betriebsbedingungen der Körperschallpegel den zweiten Referenzwert nicht übersteigt, hält das Ventil 21 den Grenzwert seiner Leckageklasse ein und es wird ein "Gut"-Zustand über die Datenschnittstelle 28 gemeldet. Überschreitet dagegen der Körperschallpegel den zweiten Grenzwert, so wird die Meldung ausgegeben, dass das Ventil 21 eine unzulässig große Leckage aufweist.

In dem Diagramm gemäß Figur 3 ist der Körperschallpegel in dB über dem Differenzdruckverhältnis Z, das nach der eingangs angegebenen Formel berechnet wird, aufgetragen. Ein Kurvenverlauf 30 des Körperschallpegels wurde bei der Inbetriebnahme eines Ventils im eingebauten Zustand erfasst und ist daher anwendungsspezifisch. Ein deutlicher Knick 31 ist im Kurvenverlauf 30 bei $Z_{Cri}$ = 0,75 erkennbar, der anzeigt, dass oberhalb dieses Differenzdruckverhältnisses die Leckageströmung durch das Ventil mit Kavitation behaftet ist. Der Körperschallpegel beträgt an der Knickstelle etwa 10 dB. Auf diesen Wert, der durch eine Linie 32 markiert ist, wird der zweite Referenzwert für den Körperschallpegel eingestellt, so dass bei Überschreiten des zweiten Referenzwerts durch den gemessenen Körperschallpegel auf das Vorliegen von Kavitation geschlossen werden kann. Wie bereits eingangs erwähnt, verschiebt sich mit größer werdender Leckage die Knickstelle 31 der Kurve 30 nach links. Das heißt, der Wert des kritischen Differenzdruckverhältnisses sinkt und Kavitation kann bereits bei geringerem Druck auf der Zulaufseite entstehen.

Figur 4 zeigt beispielhaft ein Kennlinienfeld, anhand dessen in einfacher Weise der erste Referenzwert des Drucks ermittelt werden kann. Auf der Abszisse ist der Kv-Wert des Ventils in $m^3$/h logarithmisch aufgetragen, auf der Ordinate der zu ermittelnde erste Referenzwert, der als P bezeichnet wird, in bar. Eine Kurve 41 zeigt die Abhängigkeit des erforderlichen Prüfdrucks vom Kv-Wert des Ventils für die Leckageklasse II, eine Kurve 42 für die Leckageklasse III und eine Kurve 43 für die Leckageklasse IV. Wie bereits oben angegeben, beträgt die zulässige Leckage in den jeweiligen Leckageklassen 0,5 %, 0,1 % bzw. 0,01 % des Kv-Werts des Ventils. In dem gezeigten Beispiel wird vereinfachend angenommen, dass auf der Ablaufseite des Ventils ein konstanter Druck von 1 bar herrscht. Bei dem durch das Ventil strömenden Medium handelt es sich um Wasser mit der Temperatur 10 °C. Es herrscht also ein konstanter Dampfdruck. Sind der Druck auf der Ablaufseite und der Dampfdruck ebenfalls veränderliche Größen, können diese als weitere Parameter der Kennlinienschar in einfacher Weise Berücksichtigung finden. Sie wurden jedoch in dem Diagramm gemäß Figur 4 der besseren Anschaulichkeit wegen außer Acht gelassen. Für den im Diagramm markierten Fall eines Ventils mit dem Kv-Wert 10 $m^3$/h und der Leckageklasse IV ergibt sich anhand der Kennlinie 43 ein einzustellender erster Referenzwert von 6,5 bar. Für das gleiche Ventil jedoch mit einer Leckageklasse III oder II ist der Prüfdruck 5 bar bzw. 4,2 bar zu wählen. Wenn die Leckage des Ventils den sich jeweils aus der Leckageklasse ergebenden zulässigen Wert übersteigt, kann bereits bei einem Druck auf der Zulaufseite, der geringer als der jeweilige erste Referenzwert ist, ein Körperschallpegel oberhalb des zweiten Referenzwerts und somit Kavitation detektiert werden. Daher ist mit dem Diagnosesystem eine zuverlässige Überprüfung der Leckageklasse von Ventilen möglich.

**Patentansprüche**

1. Diagnosesystem für ein Ventil, insbesondere ein Schließventil oder ein Regelventil, das über einen Antrieb (6, 27) betätigbar und in eine Rohrleitung (1) einbaubar ist, mit einem Aufnehmer (12, 24) für Körperschall und mit einer Einrichtung (14, 23) zur Auswertung des aufgenommenen Messsignals des Körperschalls, wobei ein Aufnehmer (22) für den Druck in der Zulaufseite (20) der Rohrleitung vorhanden ist, **dadurch gekennzeichnet, dass** die Auswerteeinrichtung dazu ausgebildet ist, bei geschlossenem Ventil (2, 21) den in der Zulaufseite gemessenen Druck mit einem ersten Referenzwert des Drucks, der zumindest in Abhängigkeit der Ventilgröße und der Leckageklasse des Ventils vorbestimmt ist, zu vergleichen, den Schallpegel des Körperschalls zu ermitteln und mit einem zweiten vorgegebenen oder vorgebbaren Referenzwert zu vergleichen und ein Signal zur Anzeige einer Überschreitung der zulässigen Leckage auszugeben, wenn der Schallpegel den zweiten Referenzwert überschreitet und dabei der Druck in der Zulaufseite kleiner oder gleich dem ersten Referenzwert ist.

2. Diagnosesystem nach Anspruch 1, **dadurch gekennzeichnet, dass** der erste Referenzwert anhand eines in einem Speicher hinterlegten Kennlinienfeldes bestimmt ist, dessen Parameter zumindest der Kv-Wert des Ventils und die Leckageklasse des Ventils sind.

3. Diagnosesystem nach Anspruch 1 oder 2, **dadurch gekennzeichnet, dass** der zweite Referenzwert bei einer Inbetriebnahme ermittelt ist als Wert des Schallpegels, der sich im Wesentlichen beim Übergang von turbulenter Strömung in eine Strömung mit Kavitation einstellt.

4. Diagnoseverfahren für ein Ventil, insbesondere ein Schließventil oder ein Regelventil (2, 21), das über einen Antrieb (6, 27) betätigbar und in eine Rohrleitung (1) einbaubar ist, mit einem Aufnehmer (12, 24) für Körperschall und mit einer Einrichtung (14, 23) zur Auswertung des aufgenommenen Messsignals des Körperschalls, wobei ein Aufnehmer (22) für den Druck in der Zulaufseite (20) der Rohrleitung vorhanden ist, **dadurch gekennzeichnet, dass** mit dem Aufnehmer (22) der Druck in der Zulaufseite (20) des Ventils bei geschlossenem Ventil gemessen und mit einem ersten Referenzwert des Drucks verglichen wird, der zumindest in Abhängigkeit der Ventilgröße und der Leckageklasse des Ventils vorbestimmt wird,
dass der Körperschallpegel ermittelt und mit einem zweiten vorgegebenen Referenzwert verglichen wird und
dass ein Signal zur Anzeige einer Überschreitung der zulässigen Leckage ausgegeben wird, wenn der Schallpegel den zweiten Referenzwert überschreitet und dabei der Druck in der Zulaufseite kleiner oder gleich dem ersten Referenzwert ist.

5. Diagnoseverfahren nach Anspruch 4, **dadurch gekennzeichnet, dass** der erste Referenzwert anhand eines in einem Speicher hinterlegten Kennlinienfeldes vorbestimmt wird, dessen Parameter zumindest der Kv-Wert des Ventils und die Leckageklasse des Ventils sind.

6. Diagnoseverfahren nach Anspruch 4 oder 5, **dadurch gekennzeichnet, dass** der zweite Referenzwert bei der Inbetriebnahme des Ventils ermittelt wird als der Wert des Körperschallpegels, der sich im Wesentlichen beim Übergang von turbulenter Strömung in eine Strömung mit Kavitation einstellt.

**7.** Diagnoseverfahren nach Anspruch 5 oder 6, **dadurch gekennzeichnet,**
dass der Kv-Wert des Ventils in die Auswerteeinrichtung eingegeben wird,
dass die Leckageklasse des Ventils in die Auswerteeinrichtung eingegeben wird,
dass der erste Referenzwert anhand des Kennlinienfeldes automatisch durch die Auswerteeinrichtung ermittelt wird,
dass der Druck auf der Ablaufseite des Ventils auf 1 bar eingestellt wird,
dass der Druck auf der Zulaufseite des Ventils auf den ersten Referenzwert eingestellt wird,

**Claims**

**1.** Diagnostic system for a valve, in particular a closing valve or a control valve, which can be actuated via a drive (6, 27) and can be installed in a pipeline (1), having a sensor (12, 24) for structure-borne noise and having a device (14, 23) for evaluating the recorded measurement signal of the structure-borne noise, a sensor (22) for the pressure on the upstream side (20) of the pipeline being present, **characterized in that** the evaluation device is designed to compare the pressure measured on the upstream side with a first reference value of the pressure which is predetermined at least as a function of the valve size and the leakage class of the valve, given a closed valve (2, 21), to determine the noise level of the structure-borne noise and to compare it with a second prescribed or prescribable reference value, and to output a signal for displaying an overshooting of the permissible leakage when the noise level overshoots the second reference value and, in this case, the pressure on the upstream side is less than or equal to the first reference value.

**2.** Diagnostic system according to Claim 1, **characterized in that** the first reference value is determined with the aid of a family of characteristics which is stored in a memory and whose parameters are at least the Kv value of the valve and the leakage class of the valve.

**3.** Diagnostic system according to Claim 1 or 2, **characterized in that** the second reference value is determined during commissioning as the value of the noise level which is substantially present during transition from turbulent flow to a flow with cavitation.

**4.** Diagnostic method for a valve, in particular a closing valve or a control valve (2, 21), which can be actuated via a drive (6, 27) and can be installed in a pipeline (1), having a sensor (12, 24) for structure-borne noise and having a device (14, 23) for evaluating the recorded measurement signal of the structure-borne noise, a sensor (22) for the pressure on the upstream side (20) of the pipeline being present, **characterized in that** the sensor (22) is used to measure the pressure on the upstream side (20) of the valve with the valve closed and to compare it with a first reference value of the pressure which is predetermined at least as a function of the valve size and the leakage class of the valve,
in that the structure-borne noise level is determined and compared with a second prescribed reference value, and
in that a signal for displaying overshooting of the permissible leakage is output when the noise level exceeds the second reference value and, in this case, the pressure on the upstream side is less than or equal to the first reference value.

**5.** Diagnostic method according to Claim 4, **characterized in that** the first reference value is predetermined with the aid of a family of characteristics which is stored in a memory and whose parameters are at least the Kv value of the valve and the leakage class of the valve.

**6.** Diagnostic method according to Claim 4 or 5, **characterized in that** the second reference value is determined during commissioning of the valve as the value of the structure-borne noise level which is substantially present during transition from turbulent flow to a flow with cavitation.

**7.** The diagnostic method according to Claim 5 or 6, **characterized**
in that the Kv value of the valve is input into the evaluation device,
in that the leakage class of the valve is input into the evaluation device,
in that the first reference value is determined automatically by the evaluation device with the aid of the family of characteristics,
in that the pressure on the downstream side of the valve is set to 1 bar, and
in that the pressure on the upstream side of the valve is set to the first reference value.

**Revendications**

**1.** Système de diagnostic pour un robinet notamment pour un robinet d'arrêt ou pour un robinet de réglage, qui peut être actionné par un actionneur ( 6, 27 ) et qui peut être monté dans une canalisation ( 1 ), comprenant un capteur ( 12, 24 ) du bruit de corps et un dispositif ( 14, 23 ) d'exploitation du signal de mesure capté du bruit de corps, un capteur ( 22 ) de la pression du côté ( 20 ) de l'entrée de la canalisation étant présent,
**caractérisé**

**en ce que** le dispositif d'exploitation est constitué pour, lorsque le robinet ( 2, 21 ) est fermé, comparer la pression mesurée du côté de l'entrée à une première valeur de référence de la pression, qui est déterminée à l'avance au moins en fonction de la dimension du robinet et de la classe de fuite du robinet, pour déterminer le niveau du bruit de corps et le comparer à une deuxième valeur de référence prescrite ou pouvant l'être et pour émettre un signal indiquant un dépassement de la fuite admissible si le niveau de bruit dépasse la deuxième valeur de référence et si ainsi la pression du côté de l'entrée est inférieure ou égale à la première valeur de référence.

2. Système de diagnostic suivant la revendication 1, **caractérisé en ce que** la première valeur de référence est déterminée au moyen d'une famille de courbes caractéristiques qui sont mémorisées dans une mémoire et dont les paramètres sont au moins la valeur Kv du robinet et la classe de fuite du robinet.

3. Système de diagnostic suivant la revendication 1 ou 2, **caractérisé en ce que** la deuxième valeur de référence est déterminée lors d'une mise en fonctionnement en tant que valeur du niveau de bruit qui s'établit essentiellement au passage de l'écoulement turbulent à un écoulement avec cavitation.

4. Procédé de diagnostic pour un robinet, notamment pour un robinet d'arrêt ou pour un robinet ( 2, 21 ) de réglage, qui peut être actionné par un actionneur ( 6, 27 ) et peut être monté dans une canalisation ( 1 ) comprenant un capteur ( 12, 24 ) du bruit de corps et un dispositif ( 14, 23 ) d'exploitation du signal de mesure capté du bruit de corps, dans lequel un capteur ( 22 ) de la pression du côté ( 20 ) de l'entrée de la canalisation est présent, **caractérisé en ce que** par le capteur ( 22 ) on mesure la pression du côté ( 20 ) de l'entrée du robinet alors que le robinet est fermé et on la compare à une première valeur de référence de la pression qui est déterminée à l'avance au moins en fonction de la dimension du robinet et de la classe de fuite du robinet, **en ce que** l'on détermine le niveau du bruit de corps et on le compare à une deuxième valeur de référence prescrite et **en ce qu'**on émet un signal pour l'indication d'un dépassement des fuites admissibles si le niveau de bruit dépasse la deuxième valeur de référence et ainsi si la pression du côté de l'entrée est inférieure ou égale à la première valeur de référence.

5. Procédé de diagnostic suivant la revendication 4, **caractérisé en ce que** l'on détermine à l'avance la première valeur de référence au moyen d'une famille de courbes caractéristiques qui sont mémorisées dans une mémoire et dont les paramètres sont au moins la valeur Kv du robinet et la classe de fuite du robinet.

6. Procédé de diagnostic suivant la revendication 4 ou 5, **caractérisé en ce que** l'on détermine la deuxième valeur de référence lors de la mise en fonctionnement du robinet en tant que valeur du niveau du bruit de corps qui s'établit essentiellement au passage de l'écoulement turbulent à un écoulement avec cavitation.

7. Procédé de diagnostic suivant la revendication 5 ou 6, **caractérisé en ce qu'**on entre la valeur Kv du robinet dans un dispositif d'exploitation,
**en ce qu'**on entre la classe de fuite du robinet dans le dispositif d'exploitation,
**en ce que** l'on détermine la première valeur de référence automatiquement par le dispositif d'exploitation au moyen de la famille de courbes caractéristiques,
**en ce que** l'on règle la pression du côté de la sortie du robinet à 1 bar,
**en ce que** l'on règle la pression du côté de l'entrée du robinet à la première valeur de référence.

FIG 1

FIG 2

## FIG 3

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19924377 A1
- DE 19947129 A1
- EP 0637713 A1